(19) Europäisches Patentamt
European Patent Office
Office européen des brevets

(11) **EP 1 744 915 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(21) Anmeldenummer: **05716941.9**

(22) Anmeldetag: **07.03.2005**

(51) Int Cl.:
**B60G 17/052** (2006.01)

(86) Internationale Anmeldenummer:
**PCT/EP2005/051011**

(87) Internationale Veröffentlichungsnummer:
**WO 2005/108129 (17.11.2005 Gazette 2005/46)**

(54) **VERFAHREN ZUR LUFTMENGENREGELUNG IN EINER GESCHLOSSENEN LUFTVERSORGUNGSANLAGE FÜR EIN FAHRWERK**

METHOD FOR REGULATING THE AIR VOLUME IN A CLOSED AIR SUPPLY INSTALLATION FOR A RUNNING GEAR

PROCEDE DE REGULATION DU VOLUME D'AIR DANS UNE INSTALLATION D'ALIMENTATION EN AIR FERMEE POUR MECANISME DE DEPLACEMENT

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.05.2004 DE 102004021593**

(43) Veröffentlichungstag der Anmeldung:
**24.01.2007 Patentblatt 2007/04**

(73) Patentinhaber: **Continental Teves AG & Co. oHG 60488 Frankfurt (DE)**

(72) Erfinder:
• **ILIAS, Heike**
  **30900 Wedemark (DE)**
• **FOLCHERT, Uwe**
  **31867 Lauenau (DE)**

(74) Vertreter: **Finger, Karsten et al**
**Continental Aktiengesellschaft**
**Patentabteilung**
**Postfach 169**
**30001 Hannover (DE)**

(56) Entgegenhaltungen:
**EP-A- 1 243 447       DE-C1- 10 122 567**
**US-A- 6 164 933       US-A1- 2003 107 191**

• **PATENT ABSTRACTS OF JAPAN Bd. 1995, Nr. 11, 26. Dezember 1995 (1995-12-26) & JP 07 228118 A (AISIN SEIKI CO LTD), 29. August 1995 (1995-08-29)**

**EP 1 744 915 B1**

**Beschreibung**

Die Erfindung bezieht sich auf ein Verfahren nach dem Oberbegriff des Anspruchs 1. Derartige Luftversorgungsanlagen werden beispielsweise für die Niveauregelung von Kraftfahrzeugen eingesetzt.

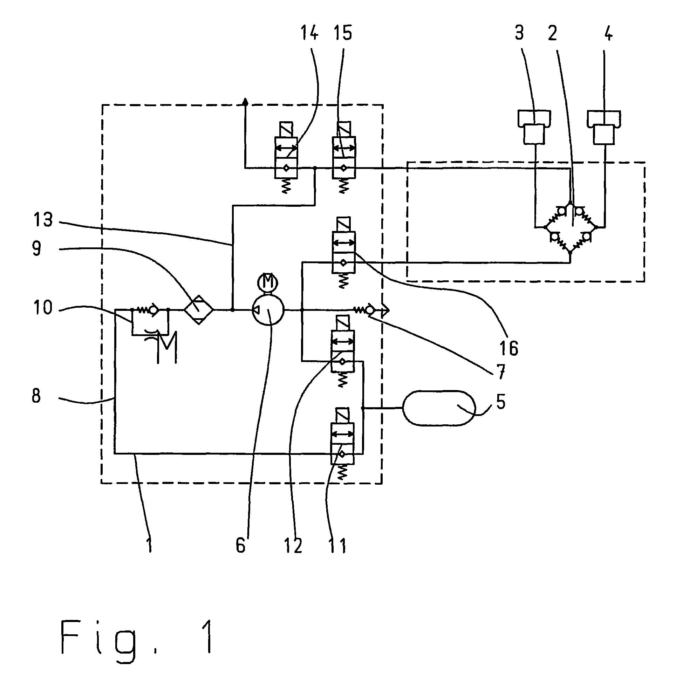

Eine solche Luftversorgungsanlage ist aus der EP 1243 447 A2 bekannt. Diese Luftversorgungsanlage besteht gemäß ihrer Fig. 1 im Wesentlichen aus einer Luftversorgungseinheit und mehreren Luftfedern zur Abstützung des Fahrzeugaufbaus.

Zur Luftversorgungseinheit gehören in der Hauptsache ein Kompressor und ein Luftspeicher. Dabei ist der Kompressor saugseitig mit der Atmosphäre und druckseitig über einen Lufttrockner und einem ersten 2/2-Wegeventil mit dem Luftspeicher verbunden. Damit versorgt der Kompressor den Luftspeicher mit frischer Luft aus der Atmosphäre. Der Kompressor besitzt saugseitig über ein zweites 2/2-Wegeventil Anschluss an die Luftfedern. Damit füllt der Kompressor über das erste 2/2-Wegeventil Druckluft aus den Luftfedern in den Luftspeicher um. Der Kompressor ist auch saugseitig über ein drittes 2/2-Wegeventil mit dem Luftspeicher und druckseitig über ein viertes 2/2-Wegeventil mit den Luftfedern verbunden. Dadurch wird Druckluft aus dem Luftspeicher in die Luftfedern befördert.

Die Luftfedern sind parallel zueinander angeordnet, wobei jeder Luftfeder ein 2/2-Wegeventil zugeordnet ist und alle 2/2-Wegeventileinheiten über eine Sammelleitung mit der Luftversorgungseinheit verbunden sind. In der gemeinsamen Sammelleitung der Wegeventileinheit befindet sich ein Drucksensor.

Solche geschlossenen Luftversorgungsanlagen arbeiten innerhalb eines vorher festgelegten Leistungsbereiches, deren Grenzen oft dadurch unterschritten werden, dass eine Druckluftmenge durch eine Leckage entweicht oder deren Grenzen oft dadurch überschritten werden, dass sich die Druckluftmenge durch einen Temperaturanstieg erhöht Das hat innerhalb der Niveauregelung des Fahrzeuges die Auswirkungen, dass sich das Anheben des Fahrzeugaufbaus verlangsamt, wenn die Druckluftmenge zu gering ist, und dass sich das Absenken des Fahrzeugaufbaus verlangsamt, wenn die Druckluftmenge zu hoch ist.

Zur Sicherstellung des Leistungsbereiches in seinen zulässigen Grenzen muss daher immer eine ausreichende Druckluftmenge in der Luftversorgungsanlage vorhanden sein. Dazu wird mit Hilfe des Drucksensors ständig der Druck in den Luftfedern und im Luftspeicher gemessen und daraus der Überschuss oder der Bedarf an zusätzlicher Druckluftmenge errechnet. Bei einem Überschuss wird eine Druckluftmenge aus der Luftversorgungsanlage abgelassen und bei einem Bedarf an einer Druckluftmenge wird der Luftspeicher mit frischer Luft aufgefüllt.

Dieses genannte Verfahren wird den technischen Anforderungen gerecht. Allerdings ist der gerätetechnische Aufwand relativ hoch. So wird in jedem der beiden Fälle der Einsatz eines Drucksensors mit einer entsprechenden Verkabelung erforderlich. Das verursacht zusätzliche Kosten. Weiterhin benötigt der Drucksensor mit seiner Verkabelung einen erheblichen Einbauraum, der in der Fahrzeugtechnik in der Regel nicht vorhanden ist und der daher bei der Realisierung der Luftversorgungsanlage zu Kompromissen führt. Auch das führt zu höheren Kosten.

Aus der DE 101 22 567 C1 ist ein weiteres Verfahren zur Luftmengenregelung bekannt, bei dem der Einfluss der momentanen Belastung bei der Regelung der Luftmenge ausgeschlossen wird und damit eine Luftmengenregelung nur bei einer durch Leckage oder Temperaturschwankung begründeten Abweichung vom ausgelegten Luftmengenband vorgenommen wird.

Dabei werden die momentanen Druckluftmengen im Luftspeicher und in den Luftfedern ermittelt, in dem die Drücke im Luftspeicher und in den Luftfedern mit Hilfe eines Drucksensors gemessen und mit dem bekannten Volumen des Luftspeichers sowie mit dem über eine Wegmessung ermittelten Volumen der Luftfedern multipliziert werden. Diese so ermittelte Druckluftmenge der Luftversorgungsanlage wird mit der für einen ausgelegten Belastungsfall optimalen Druckluftmenge verglichen. Ist die ermittelte Druckluftmenge kleiner als eine minimal erforderliche Druckluftmenge, dann muss eine bestimmte Druckluftmenge aufgefüllt werden, ist sie größer als eine maximal zulässige Druckluftmenge, dann muss eine bestimmte Druckluftmenge abgelassen werden. Aus einer bekannten Regelgeschwindigkeits-Druckluftmengen-Kennlinie wird die für das Auffüllen bzw. für das Ablassen erforderliche Zeit ermittelt und die entsprechenden Ventile bzw. der Kompressor in der Luftversorgungsanlage für diese Zeitspanne aktiviert.

Auch dieses Verfahren erfordert das Vorhandensein eines Drucksensors mit allen seinen bereits beschriebenen Nachteilen. Dazu kommt, dass dieses Verfahren softwaretechnisch relativ aufwendig ist, weil zur Ermittlung der für das Auffüllen bzw. für das Ablassen erforderlichen Zeit stets die tatsächliche Volumenmenge berechnet werden muss.

Es besteht daher die Aufgabe, das gattungsgemäße Verfahren zur Luftmengenregelung. in einer geschlossenen Luftversorgungsanlage zu vereinfachen.

Diese Aufgabe wird durch die kennzeichnenden Merkmale des Anspruchs 1 gelöst. Zweckdienliche Ausgestaltungen ergeben sich aus den Unteransprüchen 2 bis 5. Das neue Verfahren beseitigt die genannten Nachteile des Standes der Technik.

Dabei liegt der besondere Vorteil des neuen Verfahrens darin, dass zur Ermittlung der fehlenden oder der überschüssigen Druckluftmenge keine aufwendige Druckmessung mehr notwendig ist, sondern lediglich der Weg und/ oder die dafür benötigte Zeit während eines Auf- und/oder Abregelvorgangs gemessen werden müssen. Eine solche Weg-oder Zeitmessung ist mit relativ einfachen und in der Regel zur technischen Anlagenausstattung gehörenden Mitteln möglich. Das vereinfacht die gerätetechnische Ausstattung der Luftversorgungsanlage und verringert die dafür notwendigen Kosten. Dieser gerätetechnische Aufwand kann noch weiter verringert werden, wenn für die Bewegung der Luftfeder zum Beispiel der Weg vorgegeben wird. Dann muss nur noch die Zeit gemessen werden.

Das neue Verfahren zur Luftmengenregelung lässt sich natürlich auch bei anderen Luftversorgungsanlagen anwenden.

Das neue Verfahren soll an Hand eines Ausführungsbeispieles näher erläutert werden. Dazu zeigt

Fig. 1: einen Schaltplan einer geschlossenen Luftversorgungsanlage.

Danach besteht die Luftversorgungsanlage im Wesentlichen aus einer Antriebseinheit 1, aus einer Rückschlagventilkombination 2, aus mindestens zwei Luftfedern 3, 4 sowie aus einem Luftspeicher 5.

Kernstück der Antriebseinheit 1 ist ein Kompressor 6, der von einem Elektromotor angetrieben wird und der einerseits über ein Saugventil 7 mit der Atmosphäre verbunden ist. Druckseitig hat der Kompressor 6 über eine Speicherdruckleitung 8 Verbindung zum Luftspeicher 5. In dieser Speicherdruckleitung 8 befinden sich ein Lufttrockner 9, ein in Richtung zum Luftspeicher 5 öffnendes Drosselrückschlagventil 10 und ein erstes druckseitiges 2/2-Wegeventil 11. Der Kompressor 6 ist obendrein saugseitig über ein erstes saugseitige 2/2-Wegeventil 12 mit dem Luftspeicher 5 verbunden. Druckseitig steht der Kompressor 6 weiterhin über eine Verbraucherdruckleitung 13 einerseits über ein Ablassventil 14 mit der Atmosphäre und andererseits über ein zweites druckseitiges 2/2-Wegeventil 15 und der Rückschlagventilkombination 2 mit den Luftfedern 3, 4 in Verbindung. Der Kompressor 6 ist auch saugseitig über ein zweites saugseitiges 2/2-Wegeventil 16 und der Rückschlagventilkombination 2 mit den Luftfedern 3, 4 verbunden. Die Rückschlagventilkombination 2 ist so aufgebaut, dass sie in Abhängigkeit von der Bewegungsrichtung der Luftfedern 3, 4 eine Verbindung zur Druckseite oder zur Saugseite des Kompressors 6 herstellt.

Zur Befüllung des Luftspeichers 5 mit frischer Luft aus der Atmosphäre sind die beiden saugseitigen 2/2-Wegeventile 12,16 und das druckseitige 2/2-Wegeventil 15 sowie das Ablassventil 14 gesperrt und das erste druckseitige 2/2-Wegeventil 11 geöffnet Der Kompressor 6 saugt die frische Luft über das Saugventil 7 aus der Atmosphäre an und fördert sie über den Lufttrockner 9, dem sich öffnenden Drosselrückschlagventil 10 und dem geöffneten ersten druckseitigen 2/2-Wegeventil 11 in den Luftspeicher 5.

Zur Befüllung der Luftfedern 3, 4 mit komprimierter Druckluft aus dem Luftspeicher 5 werden das erste druckseitige 2/2-Wegeventil 11, das zweite saugseitige 2/2-Wegeventil 16 und das Ablassventil 14 geschlossen. Dagegen wird das erste saugseitige 2/2-Wegeventil 12 und das zweite druckseitige 2/2-Wegeventil 15 des Kompressors 6 geöffnet, sodass der Kompressors 6 die Luft aus dem Luftspeicher 5 ansaugt und sie über die Verbraucherdruckleitung 13 und der Rückschlagventilkombination 2 zu den Luftfedern 3, 4 befördert.

Zur Umfüllung nicht benötigter und trockener Druckluft aus den Luftfedern 3, 4 in den Luftspeicher 5 werden das erste saugseitige 2/2-Wegeventil 12, das zweite druckseitige 2/2-Wegeventil 15 sowie das Ablassventil 14 geschlossen und das zweite saugseitige 2/2-Wegeventil 16 und das erste druckseitige 2/2-Wegeventil 11 geöffnet. Dadurch gelangt die Luft aus den Luftfedern 3, 4 über die Rückschlagkombination 2, dem Kompressor 6 und dem ersten druckseitigen 2/2-Wegeventil 11 in den Luftspeicher 5.

Zur Regenerierung des Trockner 10 mit nicht benötigter und trockener Druckluft aus dem Luftdruckspeicher 5 werden die beiden saugseitigen 2/2-Wegeventile 12, 16 sowie das zweite druckseitige 2/2-Wegeventile 15 geschlossen und das erste druckseitige 2/2-Wegeventil 11 und das Ablassventil 14 geöffnet. Dadurch wird entgegen der Befüllungsrichtung Luft aus dem Luftspeicher 5 über die Speicherdruckleitung 8, dem gedrosselten Drosselrückschlagventil 10, dem Lufttrockner 9, der Verbraucherdruckleitung 16 und dem Ablassventil 14 in die Atmosphäre geleitet.

Zur Absicherung all dieser Funktionen ist es erforderlich, dass in der Luftversorgungsanlage innerhalb eines Luftmengentoleranzbandes eine ausreichende Druckluftmenge für einen Auslegungsfall der Fahrzeugbelastung vorhanden ist.

Bei einer Unterschreitung der ausgelegten Druckluftmenge außerhalb des Luftmengentoleranzbandes muss die Luftversorgungsanlage mit einer erforderlichen Druckluftmenge aufgefüllt werden. Dagegen wird bei einer Überschreitung der ausgelegten Druckluftmenge außerhalb des Luftmengentoleranzbandes eine bestimmte Druckluftmenge aus der Luftversorgungsanlage abgelassen. In beiden Fällen wird erreicht, dass sich der beladene Fahrzeugaufbau mit einer tolerierten Geschwindigkeit anhebt oder absenkt.

Das neue Verfahren wird angewendet, wenn der Druck im Luftspeicher 5 größer als der Druck in den Luftfedern 3, 4 ist und die Durchströmung im Drosselrückschlagventil 10 und im Lufttrockner 9 im unterkritischen Bereich liegt

Zunächst wird innerhalb der Luftversorgungsanlage ein abgeschlossener Kontrollraum ausgewählt, wozu sich am besten das Kurbelgehäuse des Kompressors 6 und der Lufttrockner 9 eignet. Dieser Kontrollraum wird auf ein definiertes Druckniveau gebracht. So ist es zweckmäßig, diesen Kontrollraum mit Hilfe des 2/2-Wegeventils 14 mit der Atmosphäre zu verbinden, sodass sich im Kontrollraum der atmosphärische Druck einstellt. Damit ist der Druck im Kontrollraum bekannt.

Anschließend wird das 2/2-Wegeventil 16 für eine definierte Zeit geöffnet, sodass bis zum Druckausgleich eine Druckluftmenge von den druckhöheren Luftfedern 3, 4 in den druckminderen Kontrollraum strömt. Dabei wird der zurückgelegte Weg der Luftfedern 3, 4 gemessen. Aus diesem Weg wird auf den Beladungszustand des Fahrzeuges geschlossen. Mit diesem Beladungszustand und der zuvor ermittelten Einsenkung der Luftfedern 3, 4 wird über eine Simulation auf den Druck $p_{LF}$ in den Luftfedern geschlossen.

Als nächstes wird über die Beziehung:

$$\overline{Q} = \frac{\Delta V}{\Delta t}$$

der mittlere Volumenstrom $\overline{Q}$ über dem Drosselrückschlagventil 10 und dem Lufttrockner 9 ermittelt, wobei angenommen wird, dass der Druck $p_{Speicher}$ im Luftspeicher 5 höher ist als der Druck $p_{LF}$. Dazu werden die 2/2-Wegeventile 11 und 15 für eine definierte Zeit $\Delta t$ geöffnet, sodass eine Druckluftmenge vom Luftspeicher 5 über den Lufttrockner 9 in die Luftfedern 3, 4 strömt. Dabei wird der von den Luftfedern 3, 4 zurückgelegte Weg gemessen und daraus die Volumenänderung $\Delta V$ errechnet.

Damit ist auch der Volumenstrom $\overline{Q}$ vom Luftspeicher 5 zu den Luftfedern 3, 4 bekannt.

Mit dem ermittelten Druck $p_{LF}$ in den Luftfedern 3, 4 und dem mittleren Volumenstrom $\overline{Q}$ sowie mit der leicht zu ermittelnden Außentemperatur T sind alle variablen Größen bekannt, um über die folgende Beziehung:

$$\frac{p_{LF}}{p_{Speicher}} = b_{ges} + \sqrt{\left(1-b_{ges}\right)^2\left[1-\left(\frac{\overline{Q}}{C_{ges}p_N}\right)^2\frac{T_N}{T}\right]}$$

den Druck $p_{Speicher}$ im Luftspeicher 5 zu berechnen, wobei in die Berechnung die anlagenspezifischen Konstanten $b_{ges}$ und $C_{ges}$ sowie eine normative Temperatur $T_N$ und ein normativer Druck $p_N$ einbezogen werden.
Mit dem so ermittelten Druck $p_{Speicher}$ im Luftspeicher 5 und dem bekannten Volumen im Luftspeicher 5 sowie mit dem ermittelten Druck $p_{LF}$ in den Luftfedern 3, 4 und mit dem über den zurückgelegten Weg der Luftfedern 3, 4 errechneten Volumen der Luftfedern 3, 4 wird die Druckluftmenge der Luftversorgungsanlage errechnet und mit dem Druckluftmengentoleranzband verglichen. Bei einer Unterschreitung der minimal zulässigen Druckluftmenge wird eine entsprechende Druckluftmenge in die Luftversorgungsanlage aufgefüllt, während bei einer Überschreitung der maximalen zulässigen Druckluftmenge eine entsprechende Druckluftmenge aus der Luftversorgungsanlage abgelassen wird.
Damit enthält die Luftversorgungsanlage wieder eine innerhalb des Druckluftmengenbandes für den Auslegungsfall liegende Druckluftmenge.
__Bezugszeichen:__

1 Antriebseinheit
2 Rückschlagventilkombination
3 Luftfeder
4 Luftfeder
5 Luftspeicher
6 Kompressor
7 Saugventil
8 Speicherdruckleitung
9 Lufttrockner
10 Drosselrückschlagventil
11 erstes druckseitige 2/2-Wegeventil
12 erstes saugseitige 2/2-Wegeventil
13 Verbraucherdruckleitung
14 Ablassventil

15   zweites druckseitige 2/2-Wegeventil
16   zweites saugseitige 2/2-Wegeventil

**Patentansprüche**

**1.** Verfahren zur Luftmengenregelung in einer geschlossenen Luftversorgungsanlage für ein Fahrwerk, bei dem der Bedarf oder der Überschuss an einer erforderlichen Druckluftmenge der Luftversorgungsanlage für einen Auslegungsfall ermittelt und über eine definierte Zeit der Luftversorgungsanlage aufgefüllt oder abgelassen wird, **dadurch gekennzeichnet, dass**

- der Druck in einem definierten Kontrollraum auf ein definiertes Druckniveau gebracht wird,
- der Druck $p_{LF}$ der Luftfedern (3, 4) aus der Größe der Einsenkung der Fahrzeugachse beim Überströmen der Luft aus den Luftfedern (3, 4) im Kontrollraum ermittelt wird,
- der mittlere Volumenstrom Q eines definierten Aufregelvorganges zwischen dem Luftspeicher (5) und den Luftfedern (3, 4) als Quotient aus der Volumenänderung der Luftfedern (3, 4) zu einer definierten Zeit ermittelt wird,
- der Druck im Luftspeicher (5) $p_{Speicher}$ aus einer funktionellen Abhängigkeit zum ermittelten Druck in den Luftfedern (3, 4) $p_{LF}$, dem ermittelten mittleren Volumenstrom $Q$ und der gemessenen Außentemperatur T errechnet wird und
- die Druckluftmenge der Luftversorgungsanlage aus dem errechneten Druck $p_{Speicher}$ des Luftspeichers (5) und dem bekannten Volumen des Luftspeichers (5) sowie aus dem ermittelten Druck $p_{LF}$ der Luftfeder (3, 4) und dem aus dem zurückgelegten Weg des Luftspeichers (3, 4) ermittelten Volumen der Luftfeder (3, 4) errechnet und mit einer optimalen Druckluftmenge verglichen wird.

**2.** Verfahren nach Anspruch 1,
**dadurch gekennzeichnet, dass** Druck $p_{Speicher}$ des Luftspeichers über die Beziehung

$$\frac{p_{LF}}{p_{Speicher}} = b_{ges} + \sqrt{(1 - b_{ges})^2 \left[ 1 - \left( \frac{\overline{Q}}{C_{ges}\, p_N} \right)^2 \frac{T_N}{T} \right]}$$

errechnet wird, wobei die anlagenspezifischen Konstanten $b_{ges}$ und $C_{ges}$ sowie eine normative Temperatur $T_N$ und ein normativer Druck $p_N$ in die Berechnung eingehen.

**3.** Verfahren nach Anspruch 2,
**dadurch gekennzeichnet, dass** der abgeschlossene Kontrollraum vom Kurbelgehäuse des Kompressors (6) und/oder vom Lufttrockner (9) bestimmt wird.

**4.** Verfahren nach Anspruch 2,
**dadurch gekennzeichnet, dass** der Druck im Kontrollraum an den Druck der Atmosphäre angeglichen wird.

**5.** Verfahren nach Anspruch 2,
**dadurch gekennzeichnet, dass** aus der Einsenkung der Luftfedern (3, 4) zunächst auf den Beladungszustand des Fahrzeuges geschlossen und dann über eine pneumatische Simulation der Druck $p_{LF}$ in den Luftfedern (3, 4) für diesen Beladungszustand bestimmt wird.

**Claims**

**1.** Method for regulating the quantity of air in a self-contained air supply system for a chassis in which the demand for or the excess of a necessary quantity of compressed air in the air supply system is determined for a design rating and is added to the air supply system or let out over a defined time, **characterized in that**

- the pressure in a defined control space is placed at a defined pressure,
- the pressure $p_{LF}$ of the air springs (3, 4) is determined from the magnitude of the lowering of the vehicle axis when the air flows out of the air springs (3, 4) into a control space,
- the average volume flow $\overline{Q}$ of a defined raising process between the air accumulator (5) and the air springs (3, 4) is determined as a quotient from the change in volume of the air springs (3, 4) at a defined time,
- the pressure in the air accumulator (5) $p_{accumulator}$ is calculated from a functional dependence on the pressure determined in the air springs (3, 4) $p_{LF}$, the determined average volume flow $Q$ and the measured external temperature T, and
- the quantity of compressed air in the air supply system is calculated from the calculated pressure $p_{accumulator}$ of the air accumulator (5) and the known volume of the air accumulator (5) as well as from the determined pressure $p_{LF}$ of the air spring (3, 4) and the volume of the air spring (3, 4) determined from the travel carried out by the air accumulator (3, 4) and is compared with an optimum quantity of compressed air.

2. Method according to Claim 1, **characterized in that** pressure $p_{accumulator}$ of the air accumulator is calculated by means of the relationship

$$\frac{p_{LF}}{p_{accumulator}} = b_{ges} + \sqrt{(1 - b_{ges})^2 \left[ 1 - \left( \frac{\overline{Q}}{C_{ges} p_N} \right)^2 \frac{T_N}{T} \right]}$$

the system-specific constants $b_{ges}$ and $C_{ges}$ and a normative temperature $T_N$ and a normative pressure $p_N$ being included in the equation.

3. Method according to Claim 2, **characterized in that** the closed-off control space is determined by the crank casing of the compressor (6) and/or by the air dryer (9).

4. Method according to Claim 2, **characterized in that** the pressure in the control space is approximated to the atmospheric pressure.

5. Method according to Claim 2, **characterized in that** firstly the load state of the vehicle is inferred from the lowering of the air springs (3, 4) and then the pressure $p_{LF}$ in the air springs (3, 4) for this load state is determined by means of a pneumatic simulation.


**Revendications**

1. Procédé de régulation du débit d'air dans une installation fermée d'alimentation en air d'un train de roulement, dans lequel les déficits ou les excédents de débit d'air nécessaire dans l'installation d'alimentation en air dans une situation nominale sont déterminés et sont amenés ou extraits dans ou hors de l'installation d'alimentation en air pendant une durée définie,
   **caractérisé en ce que**
   la pression dans un espace de contrôle défini est amenée à un niveau défini,
   la pression $p_{LF}$ des amortisseurs pneumatiques (3, 4) est déterminée à partir de l'amplitude de l'abaissement de l'essieu du véhicule lorsque l'air provenant des amortisseurs pneumatiques (3, 4) déborde dans l'espace de contrôle,
   le débit volumique moyen $\mathbf{Q}\square$ d'une opération définie de réglage entre la réserve (5) d'air et les amortisseurs pneumatiques (3, 4) est déterminé comme étant le quotient entre la modification de volume des amortisseurs pneumatiques (3, 4) et une durée définie,
   la pression $p_{Speicher}$ qui règne dans la réserve d'air (5) est calculée à partir d'une dépendance fonctionnelle entre la pression $p_{LF}$ déterminée dans les amortisseurs pneumatiques (3, 4), le débit volumique moyen $\mathbf{Q}\square$ qui a été déterminé et la température extérieure T qui a été mesurée et
   le débit d'air comprimé de l'installation d'alimentation en air est calculé à partir de la pression $p_{Speicher}$ de la réserve d'air (5) qui a été calculée et du volume connu de la réserve d'air (5) ainsi qu'à partir de la pression $p_{LF}$ des amortisseurs pneumatiques (3, 4) qui a été calculée et du volume des amortisseurs pneumatiques (3, 4) déterminé à partir du chemin parcouru par la réserve d'air (3, 4) et est comparé à un débit d'air comprimé optimum.

**2.** Procédé selon la revendication 1, **caractérisé en ce que** la pression $p_{Speicher}$ de la réserve d'air est calculée à partir de l'équation

$$\frac{p_{LF}}{p_{Speicher}} = b_{ges} + \sqrt{\left(1 - b_{ges}\right)^2 \left[1 - \left(\frac{\overline{Q}}{C_{ges}\, p_N}\right)^2 \frac{T_N}{T}\right]}$$

dans le calcul de laquelle interviennent les constantes $b_{ges}$ et $C_{ges}$ spécifiques à l'installation ainsi qu'une température normée $T_N$ et qu'une pression normée $p_N$.

**3.** Procédé selon la revendication 2, **caractérisé en ce que** l'espace fermé de contrôle est défini à partir du carter de vilebrequin du compresseur (6) et/ou du séchoir d'air (9).

**4.** Procédé selon la revendication 2, **caractérisé en ce que** la pression qui règne dans l'espace de contrôle est rendue égale à la pression atmosphérique.

**5.** Procédé selon la revendication 2, **caractérisé en ce qu'**il tire d'abord des conclusions sur l'état de charge du véhicule à partir de l'abaissement des amortisseurs pneumatiques (3, 4) et **en ce qu'**il détermine ensuite à l'aide d'une simulation pneumatique la pression $p_{LF}$ qui règne dans les amortisseurs pneumatiques (3, 4) pour cet état de charge.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1243447 A2
- DE 10122567 C1